(19) Europäisches Patentamt
European Patent Office
Office européen des brevets

(11) **EP 1 108 990 B1**

(12) **EUROPÄISCHE PATENTSCHRIFT**

(45) Veröffentlichungstag und Bekanntmachung des Hinweises auf die Patenterteilung:
**23.07.2008 Patentblatt 2008/30**

(51) Int Cl.:
***G01F 1/684*** *(2006.01)*     ***G01F 1/688*** *(2006.01)*
***G01F 1/692*** *(2006.01)*

(21) Anmeldenummer: **00126954.7**

(22) Anmeldetag: **08.12.2000**

(54) **Thermischer Massendurchfluss-Sensor**

Thermal mass flow sensor

Détecteur thermique de débit massique

(84) Benannte Vertragsstaaten:
**DE FR**

(30) Priorität: **16.12.1999 LU 90492**

(43) Veröffentlichungstag der Anmeldung:
**20.06.2001 Patentblatt 2001/25**

(73) Patentinhaber: **Delphi Technologies, Inc.**
**Troy, MI 48007 (US)**

(72) Erfinder: **Weyand, Peter**
**8064 Bertrange (LU)**

(74) Vertreter: **Beissel, Jean et al**
**Office Ernest T. Freylinger S.A.,**
**234, route d'Arlon,**
**B.P. 48**
**8001 Strassen (LU)**

(56) Entgegenhaltungen:
**US-A- 2 838 639      US-A- 4 559 814**
**US-A- 4 884 443**

**Beschreibung**

Die vorliegende Erfindung betrifft einen Massendurchflußmesser und ein Verfahren zur Herstellung eines derartigen Massendurchflußmessers.

Massendurchflußmesser werden beispielsweise in elektronischen Kraftstoffeinspritzanlagen von Verbrennungsmotoren eingesetzt, um die Masse der zugeführten Luft zu messen und so das Verhältnis Kraftstoff/Luft bestimmen zu können. Die hier eingesetzten Massendurchflußmesser sind üblicherweise in Siliziumtechnik aufgebaut und umfassen eine Elektrodenstruktur mit u.a. einem oder mehreren durch einen elektrischen Strom heizbaren Heizelement(en), das bzw. die auf einer dünnen Membran aufgebracht ist bzw. sind. Die Membran weist allgemein eine rechteckige Form auf und grenzt an ihrem umlaufenden Rand an ein Tragelement, im allgemeinen ein Si-Substrat an. Das Heizelement erstreckt sich üblicherweise gleichförmig in Richtung der größeren Ausdehnung der Membran im wesentlichen durch deren Mitte und ist beiderseits im Bereich des Randes der Membran mit jeweils einer elektrischen Zuleitung verbunden.

Ein derartiger Massendurchflussmesser ist aus US-A-4 884 443 bekannt.

Im Betrieb wird das Heizelement mittels eines geregelten Heizstromes auf einer konstanten Temperatur oberhalb einer Referenztemperatur gehalten. Die Regelung des Heizstromes geschieht aufgrund einer Widerstandsmessung, aus der wiederum mittels des Temperaturkoeffizientes des Widerstandes die jeweils momentane Temperatur des Heizelementes ermittelt werden kann. Diese Ermittlung der mittleren Temperatur des Heizelementes führt jedoch bei den herkömmlichen Massendurchflußmessern zu konstruktionsbedingten Problemen.

In der Tat ist die Membran thermisch mit dem umliegenden Tragelement d.h. mit dem Si-Substrat, kontaktiert, das sich auf Umgebungstemperatur befindet. Darüber hinaus sind die elektrischen Zuleitungen zu dem Heizelement thermisch sehr leitfähig. Die Temperatur des Heizelementes in dem Bereich des Randes der Membran ist folglich im wesentlichen gleich der Umgebungstemperatur und steigt erst mit größer werdendem Abstand vom Rand der Membran an. Lediglich in der Mitte des Heizelementes ist die Temperatur über einen schmalen Bereich annähernd konstant. Die Folge hiervon ist, daß der mittlere Bereich des Heizelementes auf eine Temperatur oberhalb der gewünschten Temperatur aufgeheizt wird, um die geringere Temperatur an den Extremitäten des Heizelementes zu kompensieren. Dies kann jedoch leicht zu Überhitzung des mittleren Bereichs des Heizelementes und bis hin zu dessen Zerstörung führen.

Die niedrigere Temperatur des Heizelementes an seinen Extremitäten hat aufgrund der Temperaturabhängigkeit des elektrischen Widerstandes darüber hinaus einen geringeren elektrischen Widerstand des Heizelementes in diesen Bereichen zur Folge. Hieraus ergibt sich eine Verteilung der Heizleistung ($P = R*I^2$) über die Länge des Heizelementes, die ein Maximum in der Mitte des Heizelementes und jeweils einem relativ flachen Anstieg im Bereich der Extremitäten des Heizelementes aufweist. Dieser Effekt wird verstärkt durch den zusätzlichen Wärmeübergang von den Extremitäten des Heizelementes auf das Tragelement und die Zuleitungen, so daß der Wärmeübergang von dem Heizelement auf einen vorbeifließenden Luftstrom über die gesamte Länge des Heizelementes stark veränderlich ist..

**Aufgabe der Erfindung**

Aufgabe der vorliegenden Erfindung ist es, einen Massendurchflußmesser vorzuschlagen, der für die oben angeführten Probleme weniger anfällig ist.

**Allgemeine Beschreibung der Erfindung**

Diese Aufgabe wird erfindungsgemäß durch einen Massendurchflußmesser nach Anspruch 1 gelöst. Wird das Heizelement mittels eines elektrischen Stromes beheizt, bewirkt der erhöhte elektrische Widerstand pro Längeneinheit $\dfrac{dR(s)}{ds}$ in dem Bereich der Extremitäten bei entsprechender Auslegung, daß trotz niedrigerer Temperatur der Unterschied zwischen dem temperaturabhängigen elektrischen Widerstand pro Längeneinheit in diesem Bereich und dem in der Mitte des Heizelementes zumindest weniger groß ist als bei einem herkömmlichen Massendurchflußmesser. Bei geeigneter Ausgestaltung des Heizelementes kann der temperaturabhängige Widerstand pro Längeneinheit an den Extremitäten des Heizelementes dem der Mitte des Heizelementes auch angeglichen werden oder sogar höher ausgelegt werden. Die elektrische Heizleistung pro Längeneinheit $\dfrac{dP}{ds}$ in dem Bereich der Extremitäten des Heizelementes kann somit der Heizleistung des mittleren Bereiches angepaßt werden oder sogar diese noch übersteigen. In letzterem Fall, d.h. wenn der temperaturabhängige Widerstand im Bereich der Extremitäten höher ist als in dem Bereich der Mitte des Heizelementes, kann auch der erhöhte Wärmeübergang von dem Heizelement auf das Tragelement und die Zuleitungen ausgeglichen werden.

Ein derartiger Massendurchflußmesser weist folglich eine wesentlich flachere Heizleistungsverteilung über seine Läge auf als herkömmliche Massendurchflußmesser. Hierdurch kann darüber hinaus ein höherer Temperaturgradient an den Extremitäten des Heizelementes erzeugt werden, so daß auch die Temperaturverteilung an den Extremitäten einen steileren Anstieg und insgesamt einen flacheren Verlauf aufweiset Ein starkes Überheizen des Heizelementes in der Mitte kann hierdurch wirksam vermieden werden, so daß die Lebensdauer des Heizelementes und damit des Massendurchflußmessers erhöht ist. Darüber hinaus wird durch die gleichmäßigere Temperaturverteilung die Bestimmung der effektiven Temperatur des Heizelementes wesentlich genauer. Das Heizelement ist weiter derart ausgestaltet, daß der elektrische Widerstand pro Längeneinheit $\frac{dR(s)}{ds}$ des Heizelementes von den Extremitäten des Heizelementes zur Mitte des Heizelementes hin kontinuierlich oder quasi-kontinuierlich ansteigt. Mit dieser Ausgestaltung kann eine optimale Heizleistungsverteilung über die Länge des Heizelementes erreicht werden. Im Prinzip kann durch eine geeignete Ausgestaltung des Heizelementes die Leistungsverteilung in einem weiten Bereich beeinflußt und so der Massendurchflußmesser an jede gewünschte Betriebsart angepaßt werden.

Der erhöhte elektrische Widerstand pro Längeneinheit $\frac{dR(s)}{ds}$ des Heizelementes in dem Bereich der Extremitäten des Heizelementes wird dadurch erreicht, daß die laterale Ausdehnung des Heizelementes in dem Bereich seiner Extremitäten kleiner ist als in dem zentralen Bereich, d.h. daß das Heizelement an seinen Extremitäten schmaler ist als in der Mitte. Der elektrische Widerstand einer schmaleren Metallisierung im Bereich der Extremitäten ist höher als der einer breiteren Metallisierung in der Mitte des Heizelementes. Auf diese Weise kann durch einfache Anpassung der Breite des Heizelementes das gewünschte Widerstandsprofil des Heizelementes erreicht werden.

Es ist anzumerken, daß der erhöhte Widerstand an den Extremitäten gegebenenfalls auch durch eine im Vergleich zu dem Mittenbereich des Heizelementes dünnere, d.h. weniger hohe Metallisierung an den Extremitäten erzeugt werden kann. Eine solche Ausgestaltung ist jedoch von der Herstellung her wesentlich aufwendiger und weniger gut zu kontrollieren.

Zur Optimierung der Heizleistungsverteilung steigt die laterale Ausdehnung des Heizelements von den Extremitäten des Heizelementes zur Mitte des Heizelementes hin kontinuierlich oder quasi-kontinuierlich an. Die Form des Heizelementes ist dabei im wesentlichen beliebig. Allgemein üblich sind in der Mikro-Technologie sogenannte Manhattan Strukturen, die durch geeignete Ätztechniken leicht erzeugt werden können. Auch 45° Strukturen sind mit derartigen Herstellungsmethoden erzielbar.

Um Asymmetrien durch das nun nicht mehr rechteckige Heizelement zu vermeiden, weist das Heizelement zwei nebeneinander verlaufende Widerstandselemente auf, wobei die laterale Ausdehnung zumindest eines, vorzugsweise jedes, der Widerstandselemente von den Extremitäten des Heizelementes zur Mitte des Heizelementes hin kontinuierlich oder quasi-kontinuierlich ansteigt und wobei jedes der Widerstandselemente auf der dem jeweils anderen Widerstandselement abgewandten Seite im wesentlichen geradlinig ausgebildet ist. Jedes der Widerstandselemente kann beispielsweise auf der dem jeweils anderen Widerstandselement zugewandten Seite eine beliebig gekrümmte Form aufweisen. Jedes der Widerstandselemente kann beispielsweise im wesentlichen die Form eines Ellipsenabschnitts, eines Parabelabschnitts oder eines Kreisabschnitts aufweisen, wobei die Sehnen der beiden Abschnitte auf der jeweils äußeren Seite des Heizelementes angeordnet und im wesentlichen parallel zueinander verlaufen. Durch eine derartige Ausgestaltung behält das Heizelement wie bei den herkömmlichen Massendurchflußmessern eine im wesentlichen rechteckige äußere Form, da die verringerte Ausdehnung des Heizelementes im Bereich seiner Extremitäten durch das Fehlen der Metallisierung entlang einer Mittellinie des Heizelementes erzeugt wird.

Es ist anzumerken, daß der erfindungsgemäße Massendurchflußmesser gegenüber einem herkömmlichen Massendurchflußmesser keine erhöhten Herstellungskosten aufweist. In der Tat ist es aufgrund der Herstellung mittels geeigneter Ätztechniken für die Herstellung des Massendurchflußmessers unerheblich, welche Form das Heizelement aufweist.

### Beschreibung anhand der Figuren

Im folgenden werden nun verschiedene Ausgestaltungen der Erfindung anhand der beiliegenden Figuren beschrieben. Es zeigen

Fig. 1: eine nicht beanspruchte Ausgestaltung eines Heizelementes eines Massendurchfluß. messers;

Fig.2: verschiedene mögliche Ausgestaltungen des Heizelementes;

Fig.3: eine erfindungsgemässe Ausgestaltung eines Heizelementes eines Massendurchflußmessers.

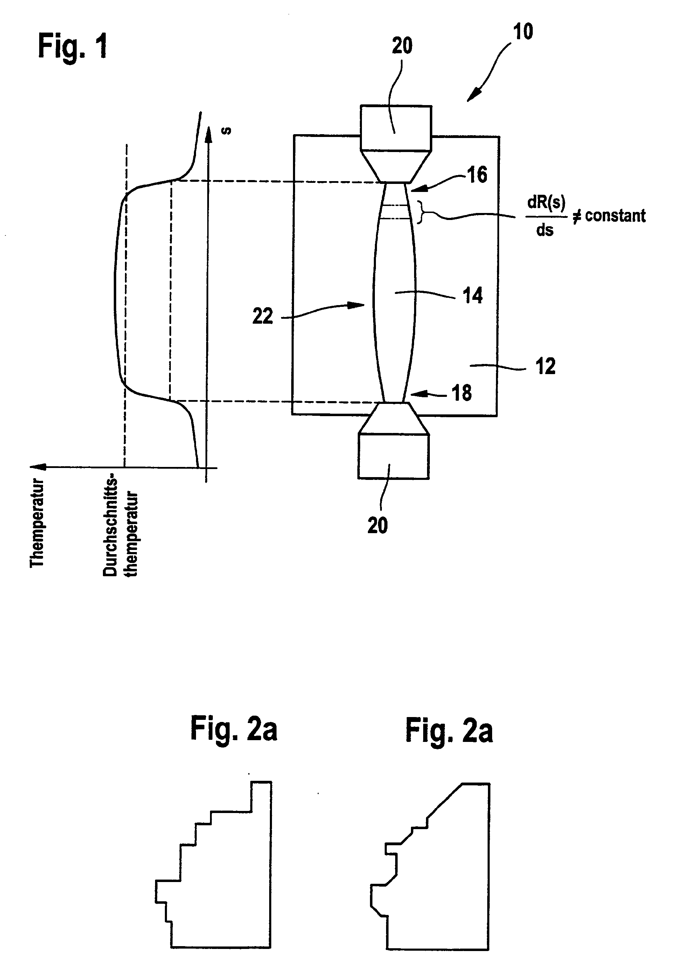

Zu Illustrationszwecken ist in Fig. 1 eine Ausgestaltung eines nicht beanspruchten Massendurchflußmessers 10 dargestellt. Sie zeigt im wesentlichen eine Draufsicht auf die Membran 12 des Massendurchflußmessers 10 mit dem darauf angeordneten Heizelement 14. Etwaige weitere Sensoren auf der Membran sind nicht eingezeichnet. Das Heizelement 14 ist im Bereich seiner beiden Extremitäten 16 und 18 jeweils mit einer Zuleitung 20 verbunden, die den Anschluß des Heizelementes 14 an eine nicht dargestellte Stromversorgung sicherstellen.

Das Heizelement 14 umfaßt im wesentlichen eine Metallisierung, die in einer geeigneten Technik auf der Membran 12 aufgebracht wurde. Bei der dargestellten Ausgestaltung weist das Heizelement 14 im Bereich seiner Extremitäten 16 und 18 jeweils eine geringere Breite auf als in dem Bereich der Mitte 22 des Heizelementes. Durch diese geringere laterale Ausdehnung der Metallisierung im Bereich der Extremitäten weist diese einen höheren elektrischen Widerstand pro Längeneinheit $\dfrac{dR(s)}{ds}$ auf, so daß im Heizbetrieb trotz der geringeren Temperaturen in diesem Bereich eine ausreichend hohe Heizleistung erzeugt wird.

In dem vorliegenden Fall steigt die laterale Ausdehnung des Heizelementes im wesentlichen kontinuierlich bzw. quasi-kontinuierlich von den Extremitäten zur Mitte hin an. Die genaue Geometrie des Heizelementes kann dabei anhand eines thermischen Modells der Membran und der gewünschten Temperaturverteilung errechnet werden. Hierdurch kann ein optimierter Verlauf der Heizleistung über die Länge des Heizelementes erreicht werden, d.h. ein möglichst flacher Verlauf mit steilen Anstiegen in den Endbereichen. Auch die Temperaturverteilung über die Länge des Heizelementes wird durch die gesteigerte Heizleistung in dem Bereich der Extremitäten beeinflußt. Durch die erfindunggemäße Ausgestaltung des Massendurchflußmessers kann ein Temperaturverlauf erreicht werden, der dem idealen Rechteckprofil wesentlich näher ist als die Temperaturverteilung herkömmlicher Massendurchflußmesser.

Verschiedene mögliche Ausgestaltungen des Heizelementes sind ausschnittsweise in Fig. 2 dargestellt. Wie oben beschrieben erfolgt die Herstellung des Heizelementes durch geeignete Ätztechniken. Mit derartigen Techniken ist die Herstellung beliebiger Geometrien für das Heizelement 14 möglich. Allgemein üblich sind in der Mikro-Technologie sogenannte Manhattan Strukturen (Fig.2 a)), die durch geeignete Ätztechniken leicht erzeugt werden können. Auch 45° Strukturen (Fig. 2 b)) sind mit derartigen Herstellungsmethoden erzielbar.

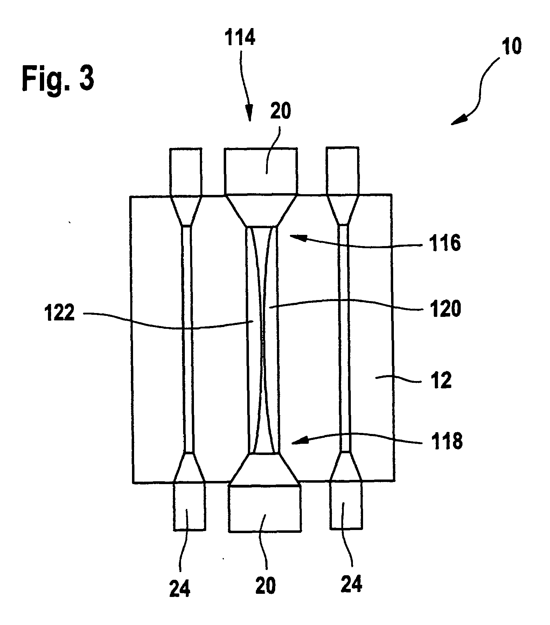

In Fig.3 ist eine erfindungsgemäße Ausgestaltung eines Massendurchflußmessers 10 dargestellt. Neben dem Heizelement 114 sind bei dieser Draufsicht auf die Membran 12 des Massendurchflußmessers 10 zwei Sensorelektroden 24 dargestellt, mittels derer im Betrieb der Massendurchflußmessers 10, die Temperatur der Membran 12 stromauf bzw. stromab von dem Heizelement 114 gemessen wird.

Bei dem vorliegenden Massendurchflußmesser weist das Heizelement 114 zwei Widerstandselemente 120 und 122, die sich nebeneinander über die Membran 12 erstrecken und die jeweils an den Extremitäten 116 und 118 des Heizelementes 114 mit einer Zuleitung verbunden sind. Die beiden Widerstandselemente 120 und 122 sind folglich parallel geschaltet und bilden zusammen das Heizelement 114.

Jedes der Widerstandselemente weist im wesentlichen die Form eines Ellipsenabschnitts, eines Parabelabschnitts oder eines Kreisabschnittes auf, wobei der Ellipsen-, Parabel- bzw. Kreisbogen jedes Widerstandselementes 120, 122 demjenigen des jeweils anderen Widerstandselementes 122, 120 zugewandt ist. Die äußere Form des so gebildeten Heizelementes 114 wird demnach von den Sehnen der Kreisabschnitte bestimmt und weist demzufolge eine im wesentlichen rechteckige Form auf.

Bei der vorliegenden Ausgestaltung wird die schmalere Metallisierung demnach durch ein Fehlen der Metallisierung entlang einer Mittellinie des Heizelementes erzeugt. Hierdurch werden Asymmetrien nach außen hin, d.h. für den über den Massendurchflußmesser hinwegfließenden Luftstrom, wirksam vermieden.

**Patentansprüche**

1. Massendurchflußmesser (10) mit einem auf einer Membran (12) angeordneten Heizelement (114), **dadurch gekennzeichnet, daß** das Heizelement (114) zwei nebeneinander verlaufende Widerstandselemente (120, 122) aufweist, wobei die laterale Ausdehnung zumindest eines der Widerstandselemente (120, 122) von den Extremitäten (116, 118) des Heizelementes (114) zur Mitte des Heizelementes (114) hin kontinuierlich oder quasi-kontinuierlich ansteigt, derart, daß der elektrische Widerstand pro

   Längeneinheit $\dfrac{dR(s)}{ds}$ des Heizelementes (114)

   in dem Bereich der Extremitäten (116,118) des Heizelementes (114) höher ist als in einem zentralen Bereich (22) des Heizelementes (114), und dass jedes der Widerstandselemente (120, 122) auf der dem jeweils anderen Widerstandselement abgewandten Seite im wesentlichen geradlinig ausgebildet ist.

2. Massendurchflussmesser nach Anspruch 1, **dadurch gekennzeichnet, dass** die laterale Ausdehnung beider Widerstandselemente (120, 122) von den Extremitäten (116,118) des Heizelementes (114) zur Mitte des Heizelementes (114) hin kontinuierlich oder quasi-kontinuierlich ansteigt.

3. Massendurchflußmesser nach Anspruch 2, **dadurch gekennzeichnet, daß** jedes der Widerstandselemente (120, 122) im wesentlichen die Form eines Ellipsenabschnitts oder eines Parabelabschnitts oder eines Kreisabschnitts aufweist.

**Claims**

1. A mass flow meter (10) having a heating element (114) arranged on a diaphragm (12), **characterised in that** the heating element (114) comprises two resistance elements (120, 122) extending next to one another, the lateral extension of at least one of the resistance elements (120, 122) increasing continuously or virtually continuously from the ends (116, 118) of the heating element (114) towards the middle of the heating element (114) in such a way that the electrical resistance per unit length $\frac{dR(s)}{ds}$ of the heating element (114) is higher in the area of the ends (116, 118) of the heating element (114) than in a central area (22) of the heating element (114), and **in that** each of the resistance elements (120, 122) is substantially straight on the side turned away from the respective other resistance element

2. A mass flow meter according to claim 1, **characterised in that** the lateral extension of both resistance elements (120, 122) increases continuously or virtually continuously from the ends (116, 118) of the heating element (114) towards the middle of the heating element (114),

3. A mass flow meter according to claim 2, **characterised in that** each of the resistance elements (120, 122) has substantially the form of a segment of an ellipse or of a segment of a parabola or of a segment of a circle.

**Revendications**

1. Détecteur de débit massique (10) comprenant un élément de chauffage (114) disposé sur une membrane (12), **caractérisé en ce que** l'élément de chauffage (114) présente deux éléments de résistance (120, 122) s'étendant l'un à côté de l'autre, l'étendue latérale au moins de l'un des éléments de résistance (120, 122) augmentant de manière continue ou quasi continue des extrémités (116, 118) de l'élément de chauffage (114) vers le milieu de l'élément de chauffage (114), de telle manière que la résistance électrique par unité de longueur $\frac{dR(s)}{ds}$

est plus élevée dans la partie des extrémités (116, 118) de l'élément de chauffage (11A) de l'élément de chauffage que dans une partie centrale (22) de l'élément de chauffage (114), et **en ce que** chacun des éléments de résistance (120, 122) est exécuté de manière essentiellement rectiligne sur le côté détourné de l'autre élément de résistance respectif

2. Détecteur de débit massique selon la revendication 1, **caractérisé en ce que** l'étendue latérale des deux éléments de résistance (120, 122) augmente de manière continue ou quasi continue des extrémités (116, 118) de l'élément de chauffage (114) vers le milieu de l'élément de chauffage (114).

3. Détecteur de débit massique selon la revendication 2, **caractérisé en ce que** chacun des éléments de résistance (120, 122) présente essentiellement la forme d'un segment d'ellipse ou d'un segment de parabole ou d'un segment de cercle

# Fig. 1

$$\frac{dR(s)}{ds} \neq constant$$

# Fig. 2a    Fig. 2a

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4884443 A